# EUROPÄISCHE PATENTSCHRIFT

(11) **EP 2 161 438 B1**
(45) Veröffentlichungstag und Bekanntmachung des Hinweises auf die Patenterteilung: **21.01.2015**
(21) Anmeldenummer: 09011301.0
(22) Anmeldetag: 03.09.2009
(51) Int. Cl.: F02M 25/07, F01N 3/04

(54) **System zur Rückführung von Abgas einer Verbrennungskraftmaschine und Verfahren zur Rückführung von Abgas einer Verbrennungskraftmaschine**
System and method for recirculating exhaust gas from a combustion engine
Système de récirculation de gaz d'échappement d'un moteur à combustion interne et procédé de récirculation de gaz d'échappement d'un moteur à combustion interne

(30) Priorität: 03.09.2008 DE 102008045479; 26.05.2009 DE 102009022719
(43) Veröffentlichungstag der Anmeldung: 10.03.2010
(73) Patentinhaber: Behr GmbH & Co. KG, 70469 Stuttgart (DE)
(72) Erfinder: Lutz, Rainer, Dipl.-Ing., 71711 Steinheim (DE); Pantow, Eberhard, Dr.-Ing., 71364 Winnenden (DE)
(74) Vertreter: Grauel, Andreas

(56) Entgegenhaltungen:
- EP-A1- 1 548 269
- WO-A1-98/07975
- WO-A1-2007/089565
- WO-A1-2009/045154
- WO-A2-2004/011784
- DE-A1- 19 918 591
- FR-A1- 2 870 892

## Beschreibung

Die Erfindung betrifft eine System zur Rückführung von Abgas einer Verbrennungskraftmaschine gemäß Anspruch 1, einen Wärmetauscher gemäß Anspruch 13 sowie ein Verfahren zur Rückführung von Abgas einer Verbrennungskraftmaschine gemäß Anspruch 14.

Bei der Niedertemperatur-AGR-Kühlung (AGR = Abgasrückführung) direkt mit Luft oder indirekt mit Niedertemperaturkühlmittel entsteht im Abgaskühler Kondensat in größerer Menge. Dieses enthält Schwefel- und Salpetersäure und ist daher sauer. Das bei der Niedertemperaturabgaskühlung anfallende Kondensat wird im Stand der Technik in der Regel direkt dem Motor zugeführt. Eine solche direkte Zuführung des Kondensats in den Motor kann zu Korrosion des Materials im Ansaugbereich des Motors sowie im Zylinder selbst führen.

Die Offenbarung der US 2001 045 090 A1 betrifft ein ähnliches Problem. Bei dem Ansatz, der in der US 2001 045 090 A1 vorgeschlagen wird, wird das Kondensat in einer Niederdruckabgasrückführung abgeschieden und wieder dem Abgasstrang zugeführt. Hierbei ist jedoch zu beachten, dass bei der in der US 2001 045 090 A1 offenbarten Ausführung kein natürliches treibendes Druckgefälle vorherrscht, so dass das Kondensat eigentlich in die Abgasleitung gepumpt werden müsste. Eine Pumpe wird aber nicht beschrieben, was zu Problemen bei der Ausführung der in der US 2001 045 090 A1 offenbarten Lehre führen kann.

Jedoch kann auch die Rückführung eines (gereinigten) Abgaskondensats einige Vorteile haben, wenn es möglichst gleichmäßig auf die einzelnen Zylinder der Verbrennungskraftmaschine verteilt wird. Beispielsweise kühlt das Kondensat den Verbrennungsprozess durch Verdunstung im Zylinder. Eine ungleiche Verteilung des Kondensats im Zylinder schmälert jedoch den Benefit einer solchen Zumischung für die NOx-Bildung. Auch ist zu bedenken, dass Abgaskondensat meist sauer ist und hierdurch eine ungleichmäßige Einbringung des Kondensats oder Komponenten daraus eine Ungleichverteilung des Korrosionsrisikos bewirkt und somit die Lebensdauer des Motors insgesamt verkürzt wird. Zu beachten ist ferner, dass eine Ansammlung von größeren Mengen Kondensat im schlimmsten Fall auch zur mechanischen Beschädigung von Bauteilen der Verbrennungskraftmaschine führen kann.

Die EP 1 617 069 A1 beschreibt die Gewinnung von Wasser aus Abgas im Hauptabgasstrom oder am Klimaverdampfer zur Rückführung in den Brennraum bzw. die Abgasrückführungsleitung.

Die DE 10 204 182 A1 beschreibt eine Wassereinspritzung vor einem Zylinder zur NOx-Reduktion. Hierbei erfolgt jedoch keine effektive Ausnutzung der bereits im System zur Verfügung stehenden Betriebsmittel.

Die DE19 619 522 A1 beschreibt in erster Linie eine Einspritzdüse mit der zwei unterschiedliche Fluide in den Brennraum eingespritzt werden können. Die Einspritzung in den Brennraum ermöglicht jedoch lediglich eine suboptimale Verbesserung besserung des Abbrandverhaltens der Kraftstoffe beim Betrieb der Verbrennungskraftmaschine.

Die EP 1 205 659 A1 beschreibt eine Luftbefeuchtung zur Ladeluftkühlung und Stickoxidreduktion. Hierzu wird jedoch Wasser aus dem Meer entnommen, was erstens mit erhöhtem Aufwand verbunden ist und zweitens bei Verbrennungskraftmaschinen von Landfahrzeugen nicht möglich ist.

Durch die WO 2007/089565 A1 ist ein Niederdruck-AGR-System bekannt geworden. Die FR 2 870 892 A1, die WO 2004/011 784 A2, die WO 98/07975 und die DE 199 18 591 A1 offenbart ein Abgassystem mit Abgasrückführung.

Die EP 1 548 269 A1 offenbart eine Vorrichtung nach dem Oberbegriff von Anspruch 1.

Bei heutigem Stand der Technik wird manchmal das rückgeführte Abgas nach der Niedertemperatur-Stufe mit der Ladeluft vermischt. Die Zumischstelle ist oftmals als T-Stück ausgeführt. Wird das Kondensat oder eine Komponente des Kondensats über ein solches T-Stück in die Zufuhrluft für die Verbrennungskraftmaschine eingeleitet, ist die Vermischung des Kondensats mit der Ladeluft weitestgehend dem Zufall überlassen. Somit kann nicht von einer gleichförmigen Verteilung auf die einzelnen Zylinder ausgegangen werden. Das Kondensat gelangt entweder als Spray oder auch als Wandfilm zu den Zylindern. Diese ungleichmäßige Verteilung des Kondensats kann ferner zu einer ungleichmäßigen Korrosion an den Innenwänden der Verbrennungszylinder führen.

Es ist daher die Aufgabe der Erfindung, ein System zur Rückführung von Abgas einer Verbrennungskraftmaschine, einen Wärmetauscher sowie ein Verfahren zur Rückführung von Abgas einer Verbrennungskraftmaschine zu schaffen, welche verbesserte Eigenschaften haben.

Diese Aufgabe wird durch ein System zur Rückführung von Abgas einer Verbrennungskraftmaschine gemäß Anspruch 1, einen Wärmetauscher gemäß Anspruch 14 sowie ein Verfahren zur Rückführung von Abgas einer Verbrennungskraftmaschine gemäß Anspruch 15 gelöst. Günstige Ausführungsformen der Erfindung sind durch die Unteransprüche und in der Beschreibung näher definiert.

Die vorliegende Erfindung schafft ein System zur Rückführung von Abgas einer Verbrennungskraftmaschine, wobei die Verbrennungskraftmaschine ein Abgassystem mit einem Hochdruck- und einem Niederdruckteil aufweist, wobei das System eine Abscheideeinheit aufweist, die ausgebildet ist, um aus einem Abgas des Hochdruckteils des Abgassystems oder einem Abgas in einem Hochdruckteil eines Zufuhrluftsystem der Verbrennungskraftmaschine ein Kondensat abzuscheiden, wobei die Abscheideeinheit ausgebildet ist, um das aus dem Abgas abgeschiedene Kondensat zumindest teilweise über eine Entsorgungsleitung in den Niederdruckteil des Abgassystems einzuleiten und wobei eine Dosiereinheit vorgesehen ist, die ausgebildet ist, um eine definierbare oder vordefinierte Menge des Kondensats oder zumindest der Komponente des Kondensats in zumindest einen Zufuhrluft-Einlasskanal eines Verbrennungszylinder einzubringen, wobei das Zufuhrluftsystem einen Niedrigdruck- und einem Hochdruckteil aufweist, wobei die Abscheideeinheit mit einer Mischeinheit verbunden ist, die ausgebildet ist, um ein durch die Abscheideeinheit gereinigtes Abgas und/oder zumindest einen Teil des Kondensats der Zufuhrluft im Hochdruckteil des Zufuhrluft-systems zuzuführen.

Ferner schafft die vorliegende Erfindung einen Abgaswärmetauscher zur Aufnahme eines Abgases aus einem Hochdruckteil eines Abgassystems einer Verbrennungskraftmaschine, wobei der Wärmetauscher ausgebildet ist, um das aus der Verbrennungskraftmaschine aufgenommene Abgas abzukühlen, ein Kondensat daraus zu extrahieren und das aus dem Abgas abgeschiedene Kondensat zumindest teilweise über eine Entsorgungsleitung in den Niederdruckteil des Abgassystems einzuleiten und wobei der Wärmetauscher eine Dosiereinheit umfasst, die ausgebildet ist, um eine definierbare oder vordefinier te Menge des Kondensats oder zumindest der Komponente des Kondensats in zumindest einen Zufuhrluft-Einlasskanal eines Verbrennungszylinder einzubringen, wobei das Zufuhrluftsystem einen Niedrigdruck- und einem Hochdruckteil aufweist, wobei die Abscheideeinheit mit einer Mischeinheit verbunden ist, die ausgebildet ist, um ein durch die Abscheideeinheit gereinigtes Abgas und/oder zumindest einen Teil des Kondensats der Zufuhrluft im Hochdruckteil des Zufuhrluft-systems zuzuführen.

Auch schafft die vorliegende Erfindung ein Verfahren zur Rückführung von Abgas einer Verbrennungskraftmaschine, wobei die Verbrennungskraftmaschine ein Abgassystem mit einem Hochdruck- und einem Niederdruckteil aufweist, wobei das Verfahren die folgenden Schritte umfasst:
- Entnehmen von Abgas aus dem Hochdruckteil des Abgassystems oder einer Zufuhrluft für die Verbrennungskraftmaschine;
- Abscheiden eines Kondensats aus dem entnommenen Abgas oder der Zufuhrluft; und
- Einleiten zumindest eines Teils oder zumindest einer Komponente des Kondensats in den Niederdruckteil des Abgassystems und
- Einbringen einer definierbaren oder vordefinierten Menge des Kondensats oder zumindest der Komponente des Kondensats in zumindest einen Zufuhrluft-Einlasskanal eines Verbrennungszylinders der Verbrennungskraftmaschine,
wobei das Zufuhrluftsystem einen Niedrigdruck- und einem Hochdruckteil aufweist, wobei die Abscheideeinheit mit einer Mischeinheit verbunden ist, die ausgebildet ist, um ein durch die Abscheideeinheit gereinigtes Abgas und/oder zumindest einen Teil des Kondensats der Zufuhrluft im Hoch-druckteil des Zufuhrluft-systems zuzuführen.

Die vorliegende Erfindung basiert auf der Erkenntnis, dass ein besserer Korrosionsschutz des Motors oder Teilen davon dann gegeben ist, wenn die schädlichen Substanzen aus dem Abgas heraus kondensiert werden und das Kondensat zumindest teilweise über den Niederdruckteil des Abgassystems entsorgt wird. Somit gelangt keine große Menge von schädlichen Bestandteilen des Abgases mehr in den Motorblock bzw. die Zylinder zurück und führt dort zu Materialverschleiß. Auch lässt sich die Niedertemperaturabgaskühlung mit dem erfinderischen Konzept vorteilhaft in Bereichen betreiben, in denen sehr viel Kondensat anfällt und es auch hierdurch zu Korrosionserscheinungen ohne Verwendung des erfindungsgemäßen Ansatzes kommen würde. Zugleich wird durch die Anordnung der Abgasaufbereitung auf der Hochdruckseite des Abgassystems eine günstige Druckdifferenz bei der Abführung des Kondensats in den Niederdruckteil des Abgassystems ausgenutzt, wodurch eine Pumpe zur Entsorgung des Kondensats entfallen kann.

Ferner kann durch die Anwendung der vorliegenden Erfindung die Gleichverteilung des Kondensats auf die einzelnen Zylinder der Verbrennungskraftmaschine mit Hilfe der Dosiereinheit deutlich verbessert werden. Vorteilhaft ergibt sich hierdurch beispielsweise eine Möglichkeit zur Ausnutzung des gesamten Potentials einer Niedertemperatur-Abgasrückführungskühlung durch Gleichverteilung des Kondensats oder Komponenten davon auf die einzelnen Zylinder der Verbrennungskraftmaschine. Auch kann eine Reduzierung des Korrosionsrisikos durch gleichmäßige Verteilung des Kondensats oder Komponenten davon realisiert werden. Zugleich lassen sich mechanische Schäden durch Kondensat-Ansammlungen im Ansaugsystem effektiv verhindern.

In einer anderen Ausführungsform der Erfindung, bei der das Abgassystem eine Abgasbehandlungseinheit im Niederdruckteil des Abgassystems aufweist, kann die Entsorgungsleitung ausgebildet sein, um zumindest einen Teil des Kondensats an einer Stelle in den Niederdruckteil des Abgassystems einzuleiten, die sich im Abgasfluss nach der Abgasbehandlungseinheit befindet. Hierdurch können teure oder empfindliche Komponenten der Abgasbehandlungseinheit (beispielsweise vor Abrieb durch nicht wasserlösliche oder aggressive Bestandteile des Kondensats) geschützt werden.

Günstig ist es auch, wenn die Verbrennungskraftmaschine ein Zufuhrluftsystem mit einem Niedrigdruck- und einem Hochdruckteil aufweist, dass dann die Abscheideeinheit mit einer Mischeinheit verbunden ist, um ein durch die Abscheideeinheit gereinigtes Abgas oder ein Teil des Kondensats der Zufuhrluft zuzuführen, die den hohen Druck aufweist. In diesem Fall kann die Korrosion von Teilen der Verbrennungskraftmaschine verhindert werden, wobei die günstigen Eigenschaften der Abgasrückführung in die Zufuhrluft der Verbrennungskraftmaschine trotzdem genutzt werden können.

Auch kann das System eine Reinigungseinheit als Korrosionsschutzeinheit gegen eine Korrosion der Verbrennungskraftmaschine durch Bestandteile des Abgases aufweisen, wobei die Reinigungseinheit die Abscheideeinheit umfasst und wobei die Reinigungseinheit ausgebildet ist, um zumindest eine Säure, die aus zumindest einem Teil des Abgases des Hochdruckteils des Abgassystems stammt, durch eine Reaktion mit einem Opfermaterial zu binden, um ein gereinigtes Abgas zu erhalten und das gereinigte Abgas zumindest teilweise einer Zufuhrluft, die einen hohen Druck aufweist, zuzuführen. Eine derartige Ausführungsform der Erfindung bietet den Vorteil, dass die aggressiven Substanzen vor einer Wiedereinleitung des Abgases in den Motor neutralisiert werden.

Durch die in dem Abscheider gekühlten Abgase (unter den Kondensationspunkt der schädlichen Stoffe) lässt sich ferner eine sehr tiefe Abkühlung der zugeführen Zufuhrluft sowie eine niedrige Saugrohrtemperaturen realisieren, wodurch sich in Folge niedrige NOₓ- und gute Verbrauchswerte auch bei Motoren mit einem für die Niedertemperatur-Abgasrückführungskühlung nicht optimierten Werkstoffkonzept realisieren lassen. Die Anordnung der Reinigungseinheit auf der Hochdruckseite hat ferner günstige Auswirkungen bei der Zufuhr (eines Teil) des Kondensats bzw. des gereinigten Abgases in die Hochdruck-seitige Zufuhrluft, da in diesem Fall ebenfalls kein hoher Druckverlust zwischen der Zufuhrluft und dem Abgas bzw. Kondensat zu befürchten ist oder eine zusätzliche Druckerhöhung des Kondensats mittels einer Pumpe nicht unbedingt erforderlich sein muss.

In einer günstigen Ausführungsform der Erfindung kann die Reinigungseinheit ein Opfermaterial umfassen, welches im Betrieb der Korrosionsschutzvorrichtung verbraucht wird. Hierdurch ist auf technisch einfache und kostengünstige Weise sichergestellt, dass die schädlichen Stoffe im Abgas vor einer Zufuhr des Abgases bzw. eines Kondensats auf dem Abgas in die Verbrennungskraftmaschine neutralisiert werden. Das Opfermaterial kann in einer Menge vorgesehen werden, dass ein Austausch im Betrieb lediglich sehr selten zu erfolgen hat.

Auch kann die Reinigungseinheit ausgebildet sein, um durch die Reaktion der Säure mit dem Opfermaterial ein wasserunlösliches oder schwer wasserlösliches Korrosionsprodukt zu bilden. Dies ermöglicht einen technisch sehr einfachen und kostengünstig zu implementierenden Ansatz zur Trennung der schädlichen Stoffe in dem Abgas von dem (wässrigen) Kondensat.

Besonders günstig ist es, wenn die Reinigungseinheit Aluminium als Opfermaterial für die Reaktion mit der im Abgas enthaltenen Säure umfasst, da hierdurch die Abscheidung von schädlichen Substanzen im Abgas durch ein kostengünstig verfügbares Material möglich wird.

Sehr einfach lassen sich auch die nicht wasserlöslichen oder schwer wasserlöslichen Substanzen aus dem Kondensat extrahieren, wenn ein Filter verwendet wird, welches ausgebildet sein kann, um diese nicht-wasserlösliche Substanzen aus dem Kondensat herauszufiltern. Dieses Filter liefert ein Kondensat mit einem sehr hohen Reinheitsgrad welches nachfolgend wieder dem Abgas bzw. der Zufuhrluft zugeführt werden kann, ohne Korrosionen in der Verbrennungskraftmaschine zu verursachen. Ferner kann das Filter auf einem technisch einfach umsetzbaren physikalischen Prinzip wie einer Sedimentation der schwer löslichen Substanzen in dem wässrigen Konzentrat basieren.

In einer anderen Ausführungsform der Erfindung kann die Reinigungseinheit ferner eine im Kondensatfluss dem Filter nachgelagerten Pumpe umfassen, wobei die Pumpe ausgebildet sein kann, um das gefilterte Kondensat dem gereinigten Abgas des Hochdruckteils des Abgassystems oder der Zufuhrluft, die einen hohen Druck aufweist, zuzuführen. Dies bietet den Vorteil, dass durch die Verwendung der Pumpe möglichst geringe Druckverluste in der Zufuhrluft beim Zuführen des Kondensats in den Hochdruckteil des Zufuhnuftsystems auftreten, wobei sich solche Druckverluste der Ladeluft bzw. Zufuhrluft nachteilig auf die Verbrennungseigenschaften bei einer Kraftstoffverbrennung in der Kraftstoffmaschine auswirken würden.

Auch kann in einer anderen Ausführungsform der Erfindung die Reinigungseinheit eine Venturi-Düse aufweisen, um das gereinigte Kondensat dem Abgas des Hochdruckteil des Abgassystems oder der Zufuhrluft, die einen hohen Druck aufweist, zuzuführen. Dies bietet den Vorteil, dass durch die Geschwindigkeitserhöhung des Zufuhrluftstroms eine weitere Abkühlung dieser Luft eintritt, die sich positiv auf die Verbrennungseigenschaften in den Zylindern der Verbrennungskraftmaschine auswirkt. Zugleich kann jedoch auch das Injektorprinzip bei der Zufuhr des Kondensats genutzt werden, so dass das Kondensat bereits durch diesen physikalischen Effekt auch bei Ausfall einer evtl. verwendeten Pumpe sicher dem gereinigten Abgas bzw. der Zufuhrluft beigemengt werden kann.

Um eine im Abgas enthaltene Wärme weiterverwenden zu können, kann auch die Abscheideeinheit oder die Reinigungseinheit als Wärmetauscher ausgebildet sein, um zumindest einen Teil des Abgases der Verbrennungskraftmaschine abzukühlen. Die getauschte Wärme kann dann für weitere Zwecke wie beispielswiese eine Heizung einer Fahrgastzelle eines von der Verbrennungskraftmaschine angetriebenen Fahrzeugs verwendet werden. Auch kann in diesem Fall eine Kombination aus Kühlung des Abgases (oder zumindest eines Teils davon) und einer Reinigung des Abgases (beispielweise durch ein Vorsehen des Opfermaterials in der als Kühlelement ausgebildeten Reinigungseinheit) in einem kombinierten Element erreicht werden, was sich kostensenkend auf das herzustellende Gesamtsystem auswirkt.

Wenn im Hochdruckteil des Abgassystems zumindest eine Kühleinheit enthalten ist, kann es auch vorteilhaft sein, dass die Abscheideeinheit oder die Reinigungseinheit im Abgasfluss der Kühleinheit nachgelagert ist oder zumindest teilweise in der Kühleinheit angeordnet ist. In diesem Fall kann (beispielsweise durch die Reinigung) eine zusätzliche Kühlung des Abgases erreicht werden, welches der Zufuhrluft zugeführt werden soll, so dass hierdurch eine nochmalige Verbesserung der Verbrennungseigenschaften in den Zylindern der Verbrennungskraftmaschine erreicht werden kann.

In einer anderen Ausführungsform der Erfindung, bei der die Kühleinheit im Hochdruckteil des Abgassystems eine Hochtemperatur- und eine Niedrigtemperaturkühleinheit umfasst, kann die Abscheideeinheit oder die Reinigungseinheit in der Niedrigtemperaturkühleinheit angeordnet sein oder der Niedrigtemperaturkühleinheit im Abgasfluss nachgelagert angeordnet sein. Dies stellt sicher, dass günstigerweise die Reinigung des Abgases mit der niedrigsten verfügbaren Abgastemperatur erfolgt, so dass einerseits die Säure nicht zu reaktiv ist und das Opfermaterial zu schnell aufbraucht und andererseits die Zufuhrluft der Verbrennungskraftmaschine mit einem möglichst kalten Kondensat bzw. einem möglich ist kalten gereinigten Abgas gespeist werden kann, wodurch sich ein optimales Verbrennungsverhalten in den Zylindern der Verbrennungskraftmaschine ergibt.

Auch kann in einer anderen Ausführungsform der Erfindung die Abscheideeinheit oder die Reinigungseinheit eine der Kühleinheit im Abgasfluss nachgelagerte separate Neutralisationseinheit umfassen, die ausgebildet ist, um die Säure aus dem Abgas des Hochdruckteils des Abgassystems durch eine Reaktion mit einem Opfermaterial zu binden. Hierdurch kann die separate Neutralisationseinheit gegebenenfalls ersetzt werden, wenn ein beispielsweise das Opfermaterial verbraucht ist. Der Ersatz einer separaten Neutralisationseinheit gegenüber einer komplexeren Abscheide-/Neutralisations-/Filtereinheit hat insbesondere in finanzieller Hinsicht Vorteile, da lediglich eine kleinere und weniger komplexe (und daher meist günstigere) Einheit auszutauschen ist.

In einer weiteren Ausführungsform der Erfindung kann die Abscheideeinheit oder die Reinigungseinheit ausgebildet ist, um das Kondensat zumindest teilweise erst in zumindest einem Verbrennungszylinder der Verbrennungskraftmaschine, insbesondere in jedem Verbrennungszylinder der Verbrennungskraftmaschine der Zufuhrluft, die den hohen Druck aufweist, zuzuführen. Dies bietet den Vorteil, dass die Verbrennungseigenschaften in den einzelnen Zylindern durch eine separate Zufuhr von Zufuhrluft und gereinigtem Kondensat einzeln eingestellt werden können.

Auch kann die Abscheideeinheit ausgebildet sein, um das Kondensat oder eine Komponente des Kondensats aus einem Gemisch von Zufuhrluft und Abgas im Hochdruckteil des Zufuhrluftsystems abzuscheiden. Eine derartige Ausführungsform der Erfindung, bei der die Abscheideeinheit nach der Zumischstelle von Abgas zur Zufuhrluft angeordnet ist, bietet den Vorteil, dass der Verdunstungseffekt mit ausgenutzt werden kann.

In einer weiteren Ausführungsform der vorliegenden Erfindung kann die Dosiereinheit ausgebildet sein, um in mehrere Zufuhrluft-Einlasskanäle von unterschiedlichen Verbrennungszylindern eine gleiche definierbare oder vordefinierte Menge des Kondensats oder der Komponente des Kondensats einzubringen. Eine derartige Ausführungsform der vorliegenden Erfindung bietet den Vorteil, dass sichergestellt werden kann, dass das zur Verfügung stehende Kondensat oder Komponenten aus diesen Kondensat gleichmäßig über mehrere oder alle Zylinder der Verbrennungskraftmaschine verteilt werden können. Hierdurch kann ein ungleichmäßiges Korrosionsverhalten in den einzelnen Zylindern der Verbrennungskraftmaschine verhindert werden.

In einer anderen Ausführungsform der vorliegende Erfindung kann die Dosiereinheit eine Neutralisator- und/oder Filtereinheit aufweisen, die ausgebildet ist, um zumindest eine Säure aus dem Kondensat oder die Komponente des Kondensats des Abgases zu neutralisieren oder das Kondensat und/oder die Komponente des Kondensats zu filtern. Eine derartige Ausführungsform der vorliegenden Erfindung bietet den Vorteil, dass aggressive Bestandteile in dem Kondensat neutralisiert und/oder herausgefiltert werden können und somit das den Zufuhrluft-Einlasskanälen zugeführt Kondensator weniger aggressiv die Wände des oder der Verbrennungszylinder angreift.

Günstig ist es auch, wenn die Dosiereinheit eine Pumpe umfasst, die ausgebildet ist, um die definierbare oder vordefinierte Menge des Kondensats oder zumindest der Komponente des Kondensats in den Zufuhrluft-Einlasskanal von zumindest einem Verbrennungszylinder einzubringen. Eine derartige Ausführungsform der vorliegenden Erfindung bietet den Vorteil eines sehr gut steuerbaren Dosierungsverhaltens, so dass der Kondensateintrag in die einzelnen Zylinder hochgradig gleichmäßig erfolgen kann. Zugleich kann durch die Pumpe eine schnelle und gezielte Förderung des Kondensats oder eine Komponente des Kondensats sichergestellt werden.

Eine technisch gut realisierbare Möglichkeit der gleichmäßigen Einbringung des Kondensats oder zumindest einer Komponente davon in die Zufuhrluft für einen Verbrennungszylinder ist dann möglich, wenn die Dosiereinheit ausgebildet ist, um die definierbare oder vordefinierte Menge des Kondensats oder der Komponente des Kondensats über eine Bohrung im Zylinderkopf des zumindest einen Verbrennungszylinders, eine Kondensat-Rail an einem Einlasskanal zwischen einem Saugrohr und dem Zylinderkopf von zumindest einem Verbrennungszylinder ,eine in das Saugrohr integrierte Kondensat-Rail oder eine in einem Zylinderkopf des Verbrennungszylinders integrierte Kondensat-Rail in die Zufuhrluft für den Verbrennungszylinder einzuführen.

### Kurze Beschreibung der Zeichnungen

Die Erfindung wird nachstehend anhand der beigefügten Zeichnungen beispielhaft näher erläutert. Es zeigt:
- Fig. 1: eine schematische Darstellung von Komponenten einer Verbrennungskraftmaschine wobei ein Ausführungsbeispiel der vorliegenden Erfindung zusammen mit der Verbrennungskraftmaschine verwendet wird;
- Fig. 2: eine schematische Darstellung eines weiteren Ausführungsbeispiels der vorliegenden Erfindung und deren Anordnung zu einer Komponente der Verbrennungskraftmaschine;
- Fig. 3: eine schematische Darstellung eines dritten Ausführungsbeispiels der vorliegenden Erfindung und deren Anordnung zu einer Komponente der Verbrennungskraftmaschine;
- Fig. 4: eine schematische Darstellung eines vierten Ausführungsbeispiels der vorliegenden Erfindung und deren Anordnung zu einer Komponente der Verbrennungskraftmaschine;
- Fig. 5: eine schematische Darstellung von Komponenten einer Verbrennungskraftmaschine, wobei ein weiteres Ausführungsbeispiel der vorliegenden Erfindung zusammen mit der Verbrennungskraftmaschine verwendet wird;
- Fig. 6: eine schematische Darstellung von Komponenten einer Verbrennungskraftmaschine, wobei ein weiteres Ausführungsbeispiel der vorliegenden Erfindung zusammen mit der Verbrennungskraftmaschine verwendet wird;
- Fig. 7a-d: Darstellungen von Möglichkeiten ein Kondensat oder eine Komponente des Kondensats einzelnen Zylindern der Verbrennungskraftmaschine zuzuführen; und
- Fig. 8: ein Ablaufdiagramm eines Ausführungsbeispiels der vorliegenden Erfindung als Verfahren.

Gleiche oder ähnliche Elemente werden in den nachfolgenden Figuren der Zeichnungen mit gleichen oder ähnlichen Bezugszeichen versehen, wobei auf eine wiederholte Beschreibung dieser Elemente verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden können oder sie zu weiteren, hier nicht explizit beschriebenen Kombinationen zusammengefasst werden können. Umfasst ein Ausführungsbeispiel eine "und/oder" Verknüpfung zwischen einem ersten Merkmal und einem zweites Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

Gemäß den Ausführungsbeispielen der vorliegenden Erfindung, wie sie nachfolgend näher beschrieben sind, kann das entstehende Kondensat direkt nach dem Abgaskühler abgeschieden und vom Motor fern gehalten werden. Hierfür kann bei der der Hochdruck-AGR das natürliche Druckgefälle zwischen Abgaskühler und Abgasstrang benutzt werden. Ferner lassen sich die im Kondensat vorhandenen Säuren neutralisieren; entweder direkt im Kühler oder anschließend. Das verbleibende Wasser könnte in einem Filter von (Korrosions-) Partikeln gereinigt werden und wird anschließend dem Abgas wieder zugeführt. So bleiben die positiven Eigenschaften des Kondensats erhalten (d.h. eine Reinigung des AGR-Kühlers oder eine Absenkung der Saugrohr- und/oder Zylindertemperatur).

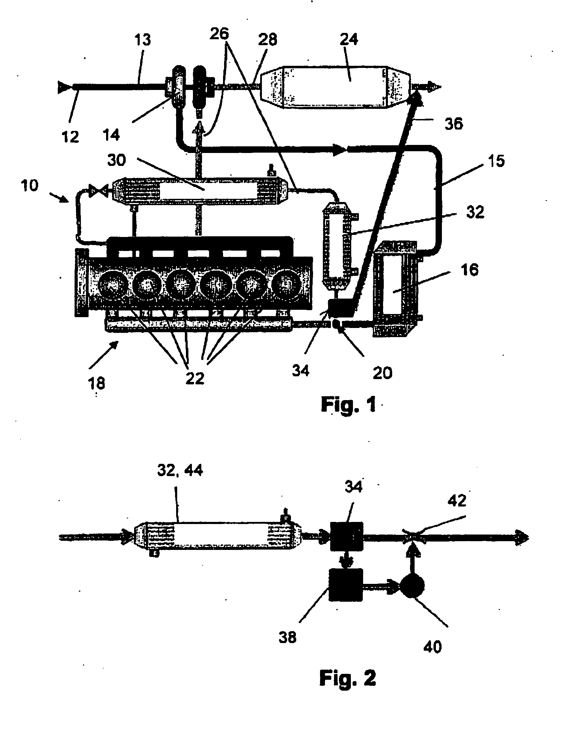

Fig. 1 zeigt eine schematische Darstellung von Komponenten einer Verbrennungskraftmaschine sowie ein Ausführungsbeispiel der vorliegenden Erfindung. Die Verbrennungskraftmaschine 10 umfasst einen Zufuhrlufteinlass 12, über den Zufuhrluft einem Turbolader 14 zugeführt wird. Der Turbolader 14 verdichtet die angesaugte Zufuhrluft und stellt somit ein Trennelement zwischen einem Niedrigdruckteil 13 und einem Hochdruckteil 15 eines Zufuhrluftsystems der Verbrennungskraftmaschine 10 dar. Die verdichtete Lade- bzw. Zufuhrluft wird im Hochdruckteil 15 nachfolgend einer Hochdruck-Kühlereinheit 16 (HP-CAC = high pressure charge air cooler = Hochdruck-Ladeluftkühler) zugeführt, die die verdichtete Ladeluft (=Zufuhrluft) kühlt, um durch eine möglichst kalte Ladeluft optimale Verbrennungseigenschaften bei einer Kraftstoffverbrennung in einem Motorblock 18 zu erreichen. Die durch die Hochdruck-Kühlereinheit 16 gekühlte Zufuhrluft wird dann (zumindest teilweise) mit einem gereinigten Kondensat (insbesondere Wasser aus dem Kondensat) des Abgases des Motorblocks 18 (oder mit dem gereinigten Abgas selbst) durch eine Mischeinheit 20 vermischt und die gekühlte und mit Kondensat bzw. Abgas vermischte Zufuhrluft in den Motorblock 18 geleitet, in dessen Zylindern 22 die Verbrennung von Kraftstoff mit der (angereicherten) Zufuhrluft ausgeführt wird. Durch die gekühlte Zufuhr- bzw. Ladeluft sowie die weitere Abkühlung durch das zugeführte Wasser bzw. das Kondensat kann somit eine Verringerung der Verbrennungstemperatur in den Zylindern 22 des Motorblocks 18 erreicht werden, was beispielsweise in einer geringen NOx-Konzentration in dem Abgas aus den Zylindern 22 des Motorblocks 18 resultiert.

Nach der Verbrennung des Kraftstoffs in den Zylindern 22 des Motorblocks 18 wird zumindest ein Teil des durch die Verbrennung entstandenen Abgases einer Antriebsturbine des Turboladers 14 zugeführt und hierin entspannt um den Turbolader 14 anzutreiben. Nach einem Durchströmen des Turboladers 14 wird das Abgas einer Abgasnachbehandlungseinheit 24 (beispielsweise einem Katalysator oder einem Rußpartikel-Filter) zugeführt und anschließend in die Umwelt freigesetzt. Der Turbolader 14 wirkt somit auch als Trennelement zwischen einem Hochdruckteil 26 und einem Niedrigdruckteil 28 eines Abgassystems der Verbrennungskraftmaschine 10.

Ein anderer Teil des Abgases aus den Zylindern 22 des Motorblocks 18 wird über ein einstellbares Abgasrückführventil bzw. Bypass-Ventil 29 hochdruckseitig dem Abgasstrang entnommen und einer Hochtemperatur- Abgasrückführungskühleinheit 30 (HT-EGRC = high temperature exhaust gas recirculation cooler = Hochtemperatur-Abgaszirkulationskühlereinheit) zugeführt, die ausgebildet ist, um die sehr heißen Abgase aus den Zylindern 22 des Motorblocks 18 zu kühlen. Das gekühlte Abgas wird nachfolgend einer Niedertemperatur-Abgasrückführungskühleinheit 32 (LT-EGRC = low temperature exhaust gas recirculation cooler = Niedertemperatur-Abgaszirkulationskühlereinheit) zugeführt, die eine weitere Abkühlung des Abgases aus den Zylindern 22 des Motorblocks 18 sicherstellt, um eine möglichst niedrige Temperatur der Zufuhrluft nach der Beimischung des Abgases bzw. eines Kondensats aus dem Abgas in die Zufuhrluft zu gewährleisten. Die Trennung zwischen Hochtemperatur- Kühlereinheit 30 und Niedertemperatur-Kühlereinheit 32 weist dabei einen besseren Kühleffekt auf, als eine einzige Kühleinheit, da durch getrennte Bauteile eine Wärmeleitung in der Kühlereinheit verhindert werden kann und somit eine kältere nachfolgende (Niedertemperatur-) Kühlereinheit zur weiteren Abkühlung der Abgase bereitgestellt werden kann. Auch können die Hochtemperatur-Abgasrückführungskühleinheit 30 und/oder die Niedertemperatur-Abgasrückführungskühleinheit 32 als Wärmetauscher implementiert sein, um die Wärme des Abgases für weitere Zwecke wie beispielswiese einer Heizfunktion einsetzen zu können.

In dem in Fig. 1 dargestellten Ausführungsbeispiel ist im Abgasfluss ferner nach der Niedertemperatur-Abgasrückführungskühleinheit 32 ein Abscheider 34 angeordnet, der ausgebildet ist, um ein Kondensat aus dem Abgas auszuscheiden. Das Kondensat, welches die schädlichen und korrosiven Bestandteile wie Säurepartikel enthält, kann über die Entsorgungsleitung 36 direkt nach der Abgasnachbehandlungseinheft 24 in den Niederdruckteil 28 des Abgassystems eingeleitet und hierdurch (beispielsweise über einen Auspuff) entsorgt werden. Durch die Einleitung des Kondensats, welches im Hochdruckteil 26 des Abgassystems abgeschieden wird, in den Niederdruckteil 28 des Abgassystems lässt sich ferner durch das Druckgefälle der Einsatz einer Pumpe zur Förderung des Kondensats in die Ausleitungsstelle vermeiden.

Das in Fig. 1 dargestellte Ausführungsbeispiel lässt sich somit folgendermaßen zusammenfassen: Das Kondensat wird nach dem Niedertemperaturabgaskühler 32 über einen Kondensatabscheider 34 entnommen. Von dort wird es über eine Leitung 36 in den heißen Abgasstrang geleitet und dort mit dem Abgasstrom des Motors 18 vermischt. Die Zuleitung erfolgt sinnvollerweise nach der Turbine 14, d.h. auf möglichst niedrigem Druckniveau. Um Korrosion in den teuren Bauteilen der Abgasnachbehandlung 24 zu vermeiden, ist eventuell eine Einleitung nach dem Abgasnachbehandlungssystem 24 sinnvoll. Die Druckdifferenz zwischen der AGR-Leitung im Hochdruckteil 26 des Abgassystems (bis 7 bar) und des Niederdruckteils 28 des Abgassystems, in dem die Abgasanlage 24 angeordnet ist (ca. 1 bar), reicht in der Regel aus die abgeschiedenen Kondensatmengen zu entsorgen ohne dass eine Pumpe benötigt wird.

In den weiteren Figuren 2 bis 4 sind Ausführungsbeispiele der Erfindung wiedergegeben, die zusätzlich oder alternativ zu der in Fig. 1 abgebildeten Abscheideeinheit 34 an einer analogen Stelle verwendet werden können. Die in den Fig. 2 bis 4 abgebildeten Abscheideeinheiten entsprechen dabei jeweil der in Fig. 1 dargestellten Abscheideeinheit 34. Die in den fig. 2 bis 4 dargestellte Anordnung von Komponenten kann auch jeweils als ein kompakter Wärmetauscher in einer Einheit ausgebildet sein, dessen Komponenten evtl. direkt austauschbar sind.

In Fig. 2 ist eine schematische Darstellung eines weiteren Ausführungsbeispiels der vorliegenden Erfindung und deren Anordnung zu einer Komponente der Verbrennungskraftmaschine wiedergegeben. Gemäß dem in Fig. 2 dargestellten Ausführungsbeispiel ist der Niedertemperaturabgaskühler 32 aus Aluminium ausgeführt, so dass es aufgrund des im Niedertemperaturabgaskühler 32 ausfallenden Kondensats zu einem korrosiven Angriff auf das Aluminium des Niedertemperaturabgaskühlers 32 kommt. Dadurch werden die im Abgas enthaltenen Säuren neutralisiert. Das entstehende Kondensat besteht jetzt im Wesentlichen aus Wasser, enthält aber auch Korrosionsprodukte (z.B. Aluminiumsulfat). Das Kondensat kann somit dem Motor zugeführt werden ohne dort Korrosion zu verursachen. Falls notwendig lassen sich die Korrosionsprodukte aus dem Kondensat entfernen, indem das Kondensat nachdem Niedertemperaturabgaskühlers 32 in einem Kondensatabscheider 34 abgeschieden wird, anschließend durch einen Filter 38 geleitet (und somit gereinigt) und dann dem rückgeführten Abgas bzw. der Zufuhrluft (die einen hohen Druck aufweist) wieder über eine Mischeinheit 20 bzw. eine Venturi-Düse 42 beigemischt wird. Der Transport durch den Filter kann entweder mit einer Pumpe 40 und/oder mittels eines an der Zumischstelle des Kondensats zum Gasstrom (aus Zufuhrluft und/oder Abgas) angeordneten Venturisystems 42 (bzw. einer in Fig. 2 nicht dargestellten Mischeinheit 20) erfolgen.

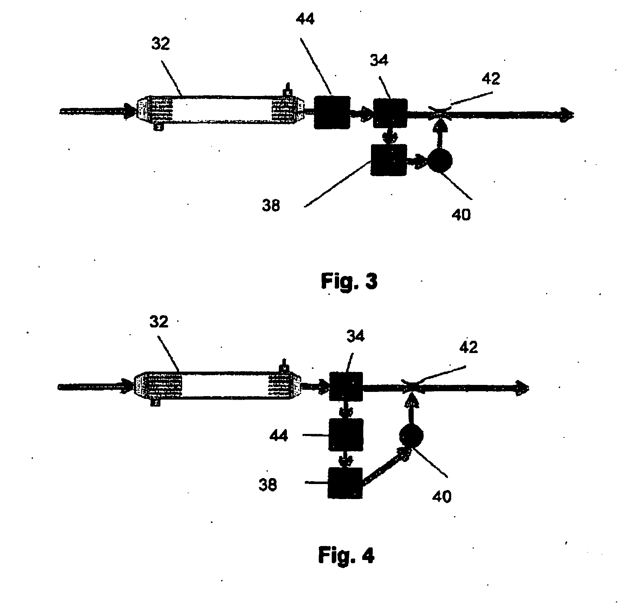

Ferner kann der Niedertemperaturabgaskühler 32 aus Edelstahl ausgeführt werden, so dass die Neutralisation des Kondensats erst nach dem Kühler erfolgen kann. Hier gibt es zwei Möglichkeiten, wobei eine erste Möglichkeit in dem Ausführungsbeispiel nach Fig. 3 als schematische Darstellung wiedergegeben ist. In diesem Fall wird ein "Opfer"-Bauteil als Neutralisator 44 verwendet und direkt nach dem Niedertemperaturabgaskühler 32 verbaut. Danach wird mit dem Kondensat verfahren wie bereits vorstehend beschrieben. Das Opferbauteil bzw. der Neutralisator 44 kann entweder im Abgaskühleraustritt oder nachdem Niedertemperaturabgaskühler 32 angeordnet werden.

Ferner kann in der zweiten möglichen Ausführungsform unter Verwendung eines Edelstahlkühlers 32 (wie sie in Fig. 4 dargestellt ist) das Kondensat in einem Abscheider 34 abgeschieden und in einem separaten Bauteil 44 neutralisiert werden; danach wird es wieder dem Strom des rückgeführten Abgases (bzw. der Zufuhrluft) zugemischt. Auch hier ist es eventuell sinnvoll, wie vorstehend beschrieben, das Kondensat nach der Neutralisation zu filtern, um eventuell schädliche Korrosionsprodukte zu entfernen. Es ist vorteilhaft wenn der Stoff, der zur Neutralisation eingesetzt wird, wasserunlösliche bzw. schwerlösliche Korrosionsprodukte erzeugt, da diese sich besser in einem Filter abscheiden lassen.

In einem alternativen oder weitergehenden Ausführungsbeispiel der Erfindung kann eine Zumischung des wiedereinzuleitenden Kondensats in die Ladeluft oder ins Saugrohr (nach Mischung Ladeluft- und Abgas) anstelle ins rückgeführte Abgas oder zylinderselektiv, d.h. eine Zumischstelle pro Zylinder erfolgen, so dass sich eine gute Gleichverteilung des gemischten Zufuhrluft-Abgasgemisches ergibt.

Durch den vorstehend beschriebenen Ansatz lässt sich die Behandlung des Kondensats auch für bei einer Niedertemperaturabgaskühlung in Bereichen betreiben, in denen viel Kondensat anfällt und es eventuell zu Korrosionserscheinungen kommen kann. Durch die damit mögliche sehr tiefe Abkühlung ergeben sich niedrige Saugrohrtemperaturen. In Folge dessen lassen sich niedrige NOx- und gute Verbrauchswerte auch auf Motoren mit einem für die NT-AGR-Kühlung nicht optimierten Werkstoffkonzept realisieren.

Durch Optimierung der Zumischstelle von Abgas in die Zufuhrluft lässt sich die Verteilung des Abgaskondensats in der Ansaugluft verbessern. Jedoch ist es unwahrscheinlich, dass sich geometrische Änderungen dieser Zumischstelle in allen Betriebspunkten des Systems gleich positiv auswirken. Mit anderen Worten ausgedrückt bedeutet dies, dass die Gleichverteilung des Kondensats in dem Gemisch aus Abgas und Zufuhrluft oftmals noch nicht sichergestellt ist, wenn das Kondensat einfach durch eine Venturi-Düse in den Zufuhrluftstrom eingespeist wird. Beispielsweise könnte sich das Kondensat an einer unteren Wand des Saugrohres ansammeln und dann entweder mechanische Beschädigungen des Systems verursachen oder zu einem hohen Prozentsatz nur in einem oder in wenigen Zylindern der Verbrennungskraftmaschine eingeleitet werden. Dies würde eine ungleichmäßige Korrosionsbelastung der unterschiedlichen Zylinder der Verbrennungskraftmaschine bedeuten, wenn beispielsweise die Neutralisation und/oder Filterung des Kondensats gemäß den vorherigen Ausführungen nicht einwandfrei funktioniert. Anderenfalls könnte durch den ungleichmäßigen Kondensateintrag auch nur eine ungleichmäßige Verminderung der NOx-Entstehung in den einzelnen Zylindern erreicht werden.

Ein solches Problem lässt sich durch eine zylinderselektive Zumischung des Kondensats zur Ansaugluft verbessern. Hierbei wird das Kondensat zunächst aus der Gasphase abgeschieden, durch ein Dosiersystem geleitet und im Ansaugkanal jedes einzelnen Zylinders wieder zugemischt. Für die Ausgestaltung eines solchen Systems bieten sich mehrere Varianten an, von denen nachfolgend zwei exemplarisch hier beschrieben werden.

Gemäß einem Ausführungsbeispiel kann ein solches System zur zylinderselektiven Zumischung des Kondensats aus einem Abscheider und einer Zumisch oder Dosiereinheit bestehen. Optional kann das System auch einen Neutralisator zur Anhebung des pH-Werts, einen Filter zum Herausfiltern von Korrosionprodukten (Partikel) und eine Pumpe zur Unterstützung des Kondensattransports umfassen.

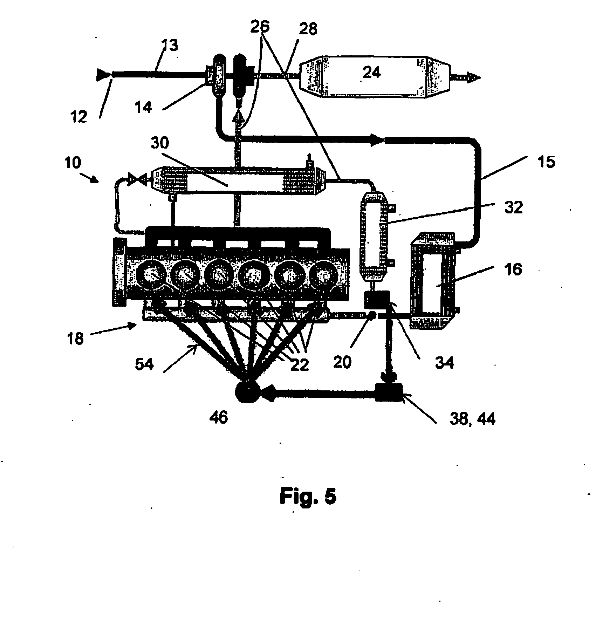

Eine erste Variante der Anordnung von Komponenten eines Systems zur zylinderselektiven Zumischung des Kondensats ist in Fig. 5 näher dargestellt. Eine solche Anordnung entspricht teilweise der in Fig. 1 dargestellten Anordnung, wobei ebenfalls die Abschneideeinheit 34 im Abgasfluss nach einem Niedertemperatur-Abgasrückführungskühler 32 angeordnet ist. Das von dieser Abscheiderneinheit 34 aus dem Abgas gewonnene Kondensat kann einer optionalen Neutralisations- und/oder Filtereinheit 34 bzw. 38 zugeführt werden, in der beispielsweise kondensierte Säuren aus dem Abgas neutralisiert werden. Diese Neutralisation kann derart ausgeführt werden, dass schwer lösliche oder unlösliche Abbauprodukte entstehen, die dann aus dem neutralisierten Kondensat herausgefiltert werden können. Das neutralisierte und gefilterte Kondensat man kann dann einer optionalen Pumpe 46 zugeführt werden, die eine gleichmäßige Verteilung des zur Verfügung stehenden Kondensats auf einen oder mehrerer Zylinder 22 der Verbrennungskraftmaschine 10 durchführt.

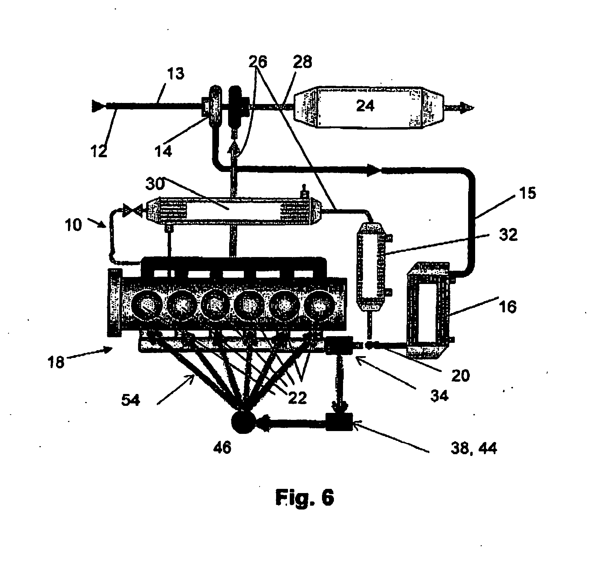

Eine zweite Variante der Anordnung von Komponenten des Systems zur zylinderselektiven Zumischung des Kondensats ist in Fig. 6 näher dargestellt. Gegenüber der Anordnung der Komponenten nach Fig. 5 ist nun die Abscheideeinheit 34 nach der Mischeinheit 20 angeordnet, so dass das Kondensat aus einer mit Abgas vermischten Zufuhrluft gewonnen wird. Eine Anordnung von Komponenten nach Fig. 6 ermöglicht dabei die Ausnutzung des Verdunstungseffekts, was sich vorteilhaft auswirkt.

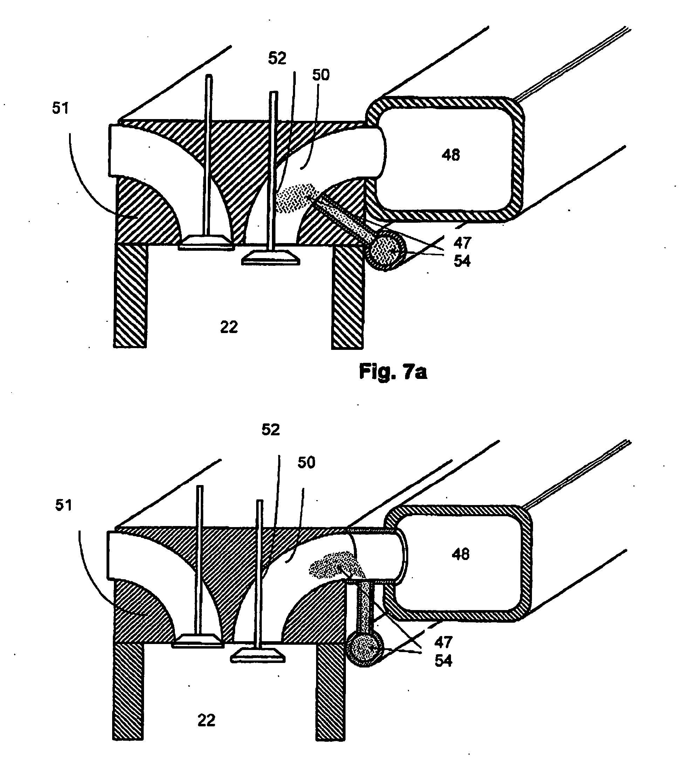

Die Zumischstellen zu den einzelnen Zylindern 22 lassen können gemäß den Figuren 7a bis 7d wie folgt ausgeführt sein.

Fig. 7a zeigt eine Darstellung einer ersten Möglichkeit ein Kondensat 47 oder eine Komponente des Kondensats 47 einzelnen Zylindern der Verbrennungskraftmaschine zuzuführen. Dabei wird das Abgas-Zufuhrluft-Gemisch über ein Saugrohr 48 an die unterschiedlichen Zylinder 22 geführt. Jeder Zylinder 22 weist zumindest einen Zufuhrluft-Einlasskanal 50 in einen Zylinderkopf 51 auf, durch den das Abgas-Zufuhrluft-Gemisch aus dem Saugrohr 48 in den. Verbrennungsraum des Zylinders 22 geleitet wird. Ventile 52 steuern die Zufuhr des Abgas-Zufuhr-Gemisches (dem, je nach Auslegung der Verbrennungskraftmaschine, auch einen Kraftstoff zugemischt werden kann) in den Verbrennungsraum des Zylinder 22. Das Kondensat 47 wird nun über eine Kondensat-Rail 54 (d.h. eine Kondensat-Verteilungsschiene) zu den einzelnen Zylindern 22 geführt und über eine Bohrung in dem Zylinderkopf 51 in den Einlasskanal 50 eingespritzt oder eingeleitet.

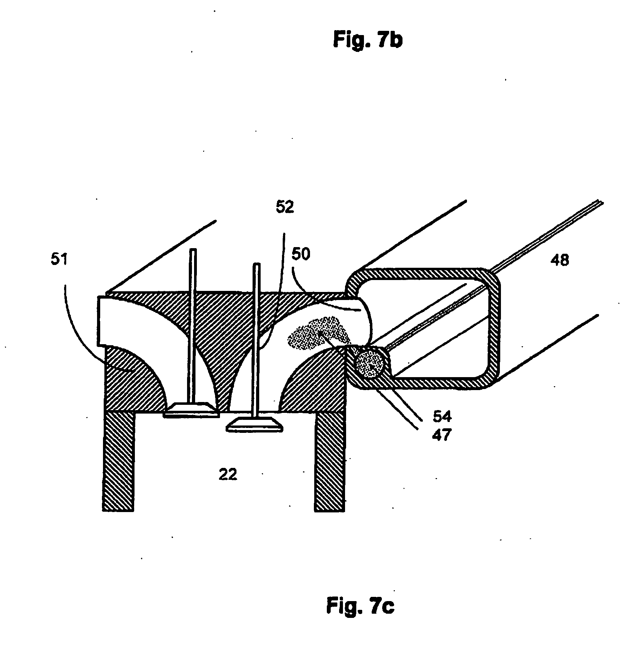

Fig. 7b zeigt eine Darstellung einer zweiten Möglichkeit ein Kondensat 47 oder eine Komponente des Kondensats 47 einzelnen Zylindern 22 der Verbrennungskraftmaschine 10 zuzuführen. Der Aufbau der Zuführung des Kondensats zum Abgas-Zufuhrluft-Gemisch ist nun ähnlich der Anordnung aus Fig. 7a ausgelegt, wobei nun jedoch die Kondensat-Rail oder Kondensat-Verteilungsschiene 54 derart ausgelegt ist, dass das Kondensat 47 oder eine Komponente des Kondensats 47 in einen Teilbereich des Einlasskanals 50 zwischen dem Saugrohr 48 und dem Zylinderkopf 51 eingeleitet wird. Hier kann einen technisch einfache Ankopplung der Einspritzvorrichtung realisiert werden.

Fig. 7c zeigt eine Darstellung einer dritten Möglichkeit ein Kondensat oder eine Komponente des Kondensats einzelnen Zylindern 22 der Verbrennungskraftmaschine 10 zuzuführen. Der Aufbau der Zuführung des Kondensats 47 zum Abgas-Zufuhrluft-Gemisch ist ebenfalls ähnlich der Anordnung aus Fig. 7a ausgelegt, wobei nun die Kondensat-Verteilungsschiene 54 in das Saugrohr 48 integriert ist. Dies bietet herstellungstechnische Vorteile, da nun die Kondensat-Verteilungsschiene 54 nicht mehr separat befestigt werden muss, sondern bei der Herstellung des Saugrohres 48 integriert werden kann und einfach zu befestigen ist.

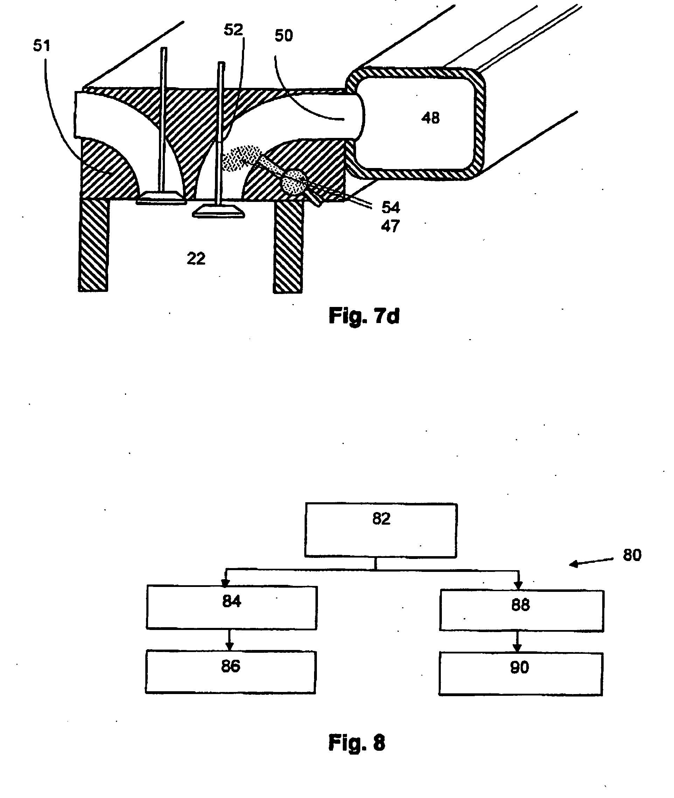

Fig. 7d zeigt eine Darstellung einer vierten Möglichkeit ein Kondensat 47 oder eine Komponente des Kondensats 47 einzelnen Zylindern 22 der Verbrennungskraftmaschinen 10 zuzuführen. Der Aufbau der Zuführung des Kondensats 47 zum Abgas-Zufuhrluft-Gemisch ist ebenfalls ähnlich der Anordnung aus Fig. 7a ausgelegt, vorbei nun die Kondensat-Verteilungsschiene 54 direkt in den Zylinderkopf 51 integriert ist. Auch eine derartige Anordnung bietet herstellungstechnische Vorteile, da nun keine separate Kondensat-Verteilungsschiene 54 herzustellen und anzubringen ist, sondern diese Herstellung bei der Fertigung des Zylinderkopfes 51 einfach vorgenommen werden kann.

Die vorstehend in den Teilfiguren der Fig. 7 genannten Möglichkeiten zur Einbringung des Kondensats 47 oder zumindest einer Komponente daraus in das Abgas-Zufuhrluft-Gemisch direkt im Einlasskanal 50, vorzugsweise unter Verwendung einer Dosiereinheit, bieteen den Vorteil einerseits eine möglichst gleichmäßige Verteilung von Kondensat 47 auf die einzelnen Zylinder 22 sicherzustellen und andererseits auch eine möglichst gute Verteilung des Kondensats 47 im Verbrennungsraum des Zylinder 22 zu ermöglichen.

In Fig. 8 ist ein Ablaufdiagramm eines Ausführungsbeispiels der vorliegenden Erfindung als Verfahren wiedergegeben. Das Ablaufdiagramm betrifft ein Verfahren 80 zum Schutz eine Verbrennungskraftmaschine 10 gegen Korrosion, wobei die Verbrennungskraftmaschine 10 ein Zufuhrluftsystem mit einem Niedrigdruck- 13 und einem Hochdruckteil 15 sowie ein Abgassystem mit einem Hochdruck- 26 und einem Niederdruckteil 28 aufweist. Das Verfahren 80 umfasst einen Schritt des Entnehmens 82 von Abgas aus dem Hochdruckteil 26 des Abgassystems oder einer Zufuhrluft für die Verbrennungskraftmaschine sowie einen Schritt des Abscheidens 54 eines Kondensats aus dem entnommenen Abgas oder der Zufuhrluft. Ferner umfasst das Verfahren 80 einen Schritt des Einleitens 86 zumindest eines Teils des Kondensats in den Niederdruckteil 28 des Abgassystems oder in die Zufuhrluft für die Verbrennungskraftmaschine. In einem optionalen parallelen oder zusätzlichen Verarbeitungspfad weist das Verfahren 80 einen Schritt des Bindens 88 von zumindest einer Säure aus dem Abgas des Hochdruckteils 26 des Abgassystems durch eine Reaktion mit einem Opfermaterial auf, um ein gereinigtes Abgas zu erhalten. Hieran anschließend weist das Verfahren 80 einen Schritt des zumindest teilweisen Zuführens 90 des gereinigten Abgases zu einer Zufuhrluft in einem Hochdruckteil des Zufuhrluftsystems auf.

### Bezugszeichenliste

- 10: Verbrennungskraftmaschine
- 12: Zufuhrlufteinlass
- 13: Niederdruckteil des Zufuhrluftsystems
- 14: Turbolader
- 15: Hochdruckteil des Zufuhrluftsystems
- 16: Hochdruck-Ladeluftkühler
- 18: Motorblock
- 20: Mischeinheit
- 22: Zylinder
- 24: Abgasnachbehandlungseinheit
- 26: Hochdruckteil des Abgassystems
- 28: Niederdruckteil des Abgassystems
- 29: Abgasrückführventil, Bypass-Ventil
- 30: Hochtemperatur-Abgasrückführungskühleinheit, Wärmetauscher
- 32: Niedertemperatur-Abgasrückführungskühleinheit, Wärmetauscher
- 34: (Kondensat-) Abscheider, Abscheideeinheit
- 36: Entsorgungsleitung
- 38: Filter
- 40: Pumpe
- 42: Venturisystem
- 44: Neutralisator
- 46: Dosierpumpe
- 47: Kondensat
- 48: Saugrohr
- 50: Zufuhrluft-Einlasskanäle der (Verbrennungs-) Zylinder 22
- 51: Zylinderkopf
- 52: Ventile
- 54: Kondensat-Rail; Kondensat-Verteilungsschine
- 80: Verfahren zur Rückführung von Abgas einer Verbrennungskraftmaschine
- 82: Schritt des Entnehmens von Abgas aus dem Hochdruckteil des Abgassystems oder einer Zufuhrluft für die Verbrennungskraftmaschine
- 84: Schritt des Abscheidens eines Kondensats aus dem entnommenen Abgas oder der Zufuhrluft
- 86: Schritt des Einleitens zumindest eines Teils des Kondensats in den Niederdruckteil des Abgassystems oder in die Zufuhrluft für die Verbrennungskraftmaschine
- 88: Schritt des Bindens von zumindest einer Säure, die aus dem Abgas des Hochdruckteils des Abgassystems stammt durch eine Reaktion mit einem Opfermaterial, um ein gereinigtes Abgas zu erhalten
- 90: Schritt des zumindest teilweisen Zuführens des gereinigten Abgases zu einer Zufuhrluft des Zufuhrluftsystems, die einen hohen Druck aufweist

## Patentansprüche

1. System (34, 36, 38, 40, 42, 44) zur Rückführung von Abgas einer Verbrennungskraftmaschine (10), wobei die Verbrennungskraftmaschine (10) ein Abgassystem mit einem Hochdruck- (26) und einem Niederdruckteil (28) aufweist, wobei das System (34, 36, 38, 40, 42, 44) eine Abscheideeinheit (34) aufweist, die ausgebildet ist, um aus einem Abgas des Hochdruckteils (26) des Abgassystems oder einem Abgas in einem Hochdruckteil (15, 20) eines Zufuhrluftsystems der Verbrennungskraftmaschine (10) ein Kondensat abzuscheiden, wobei die Abscheideeinheit (34) ausgebildet ist, um das aus dem Abgas abgeschiedene Kondensat zumindest teilweise über eine Entsorgungsleitung (36) in den Niederdruckteil (28) des Abgassystems einzuleiten, **dadurch gekennzeichnet, dass** eine Dosiereinheit (38, 44, 46) vorgesehen ist, die ausgebildet ist, um eine definierbare oder vordefinierte Menge des Kondensats oder zumindest der Komponente des Kondensats in zumindest einen Zufuhrluft-Einlasskanal (50) eines Verbrennungszylinder (22) einzubringen, wobei das Zufuhrluftsystem einen Niedrigdruck- (13) und einem Hochdruckteil (15) aufweist, wobei die Abscheideeinheit (34) mit einer Mischeinheit (20) verbunden ist, die ausgebildet ist, um ein durch die Abscheideeinheit (34) gereinigtes Abgas und/oder zumindest einen Teil des Kondensats der Zufuhrluft im Hochdruckteil (15) des Zufuhrluftsystems zuzuführen.

2. System (34, 36, 38, 40, 42, 44) gemäß Anspruch 1, wobei das Abgassystem eine Abgasbehandlungseinheit (24) im Niederdruckteil (28) des Abgassystems aufweist, **dadurch gekennzeichnet, dass** die Entsorgungsleitung (36) ausgebildet ist, um zumindest einen Teil des Kondensats an einer Stelle in den Niederdruckteil (28) des Abgassystems einzuleiten, die sich im Abgasfluss nach der Abgasbehandlungseinheit (24) befindet.

3. System (34, 36, 38, 40, 42, 44) gemäß Anspruch 1 oder 2, **dadurch gekennzeichnet, dass** das System (34, 36, 38, 40, 42, 44) eine Reinigungseinheit (34, 38, 40, 42, 44) als Korrosionsschutzeinheit gegen eine Korrosion der Verbrennungskraftmaschine (10) durch Bestandteile des Abgases aufweist, wobei die Reinigungseinheit (34, 38, 40, 42, 44) die Abscheideeinheit (34) umfasst und wobei die Reinigungseinheit (34, 38, 40, 42, 44) ausgebildet ist, um zumindest eine Säure, die aus zumindest einem Teil des Abgases des Hochdruckteils (26) des Abgassystems stammt, durch eine Reaktion mit einem Opfermaterial zu binden, um ein gereinigtes Abgas zu erhalten und das gereinigte Abgas zumindest teilweise einer Zufuhrluft in dem Hochdruckteil (15) des Zufuhrluftsystems zuzuführen.

4. System (34, 36, 38, 40, 42, 44) gemäß Anspruch 3, **dadurch gekennzeichnet, dass** die Reinigungseinheit (32, 38, 40, 42, 44) ein Opfermaterial umfasst, welches im Betrieb des Systems der Korrosionsschutzvorrichtung (34, 36, 38, 40, 42, 44) verbraucht wird.

5. System gemäß Anspruch 3 oder 4, **dadurch gekennzeichnet, dass** die Reinigungseinheit (34, 38, 40, 42, 44) ausgebildet ist, um durch die Reaktion der Säure mit dem Opfermaterial ein wasserunlösliches oder schwer wasserlösliches Korrosionsprodukt zu bilden.

6. System gemäß einem der Ansprüche 3 bis 5, **dadurch gekennzeichnet, dass** die Reinigungseinheit (34, 38, 40, 42, 44) eine Venturi-Düse (42) aufweist, um das gereinigte Kondensat dem Abgas des Hochdruckteils (26) des Abgassystems oder der in dem Hochdruckteil (15) des Zufuhrluftsystems zuzuführen.

7. System (34, 36, 38, 40, 42, 44) gemäß einem der Ansprüche 1 bis 6, wobei im Hochdruckteil (26) des Abgassystems zumindest eine Kühleinheit (30, 32) enthalten ist, **dadurch gekennzeichnet, dass** die Abscheideeinheit (34) oder die Reinigungseinheit (34, 38, 40, 42, 44) im Abgasfluss der Kühleinheit (30, 32) nachgelagert ist oder zumindest teilweise in der Kühleinheit (32) angeordnet ist.

8. System (34, 36, 38, 40, 42, 44) gemäß einem der Ansprüche 1 bis 7, **dadurch gekennzeichnet, dass** die Abscheideeinheit (34) ausgebildet ist, um das Kondensat oder eine Komponente des Kondensats aus einem Gemisch von Zufuhrluft und Abgas im Hochdruckteil (15) des Zufuhrluftsystems abzuscheiden.

9. System (34, 36, 38, 40, 42, 44) gemäß einem der Ansprüche 1 bis 8, **dadurch gekennzeichnet, dass** die Dosiereinheit (38, 44, 46) ausgebildet ist, um in mehrere Zufuhrluft-Einlasskanäle (48) von unterschiedlichen Verbrennungszylindem (22) eine gleiche definierbare oder vordefinierte Menge des Kondensats oder der Komponente des Kondensats einzubringen.

10. System (34, 36, 38, 40, 42, 44) gemäß einem der Ansprüche 8 oder 9, **dadurch gekennzeichnet, dass** die Dosiereinheit (38, 44, 46) eine Neutralisator- und/oder Filtereinheit (38, 44) aufweist, die ausgebildet ist, um zumindest eine Säure aus dem Kondensat oder die Komponente des Kondensats des Abgases zu neutralisieren und/oder das Kondensat oder die Komponente des Kondensats zu filtern.

11. System (34, 36, 38, 40, 42, 44) gemäß einem der Ansprüche 8 bis 10, **dadurch gekennzeichnet, dass** die Dosiereinheit (38, 44, 46) eine Pumpe (46) umfasst, die ausgebildet ist, um die definierbare oder vordefinierte Menge des Kondensats oder zumindest der Komponente des Kondensats in den Zufuhrluft-Einlasskanal (48) von zumindest einem Verbrennungszylinder (22) einzubringen.

12. System (34, 36, 38, 40, 42, 44) gemäß einem der Ansprüche 8 bis 10, **dadurch gekennzeichnet, dass** die Dosiereinheit (38, 44, 46) ausgebildet ist, um die definierbare oder vordefinierte Menge des Kondensats oder der Komponente des Kondensats Ober eine Bohrung (56) im Zylinderkopf (51) des zumindest einen Verbrennungszylinders (22), eine Kondensat-Rail (54) an einem Einlasskanal (50) zwischen einem Saugrohr (48) und dem Zylinderkopf (51) von zumindest einem Verbrennungszylinder (22), eine in das Saugrohr (48) integrierte Kondensat-Rail (54) oder eine in einem Zylinderkopf (51) des Verbrennungszylinders (22) integrierte Kondensat-Rail (54) in die Zufuhrluft für den Verbrennungszylinder (22) einzuführen.

13. Abgaswärmetauscher (30, 32, 34, 36) zur Aufnahme eines Abgases aus einem Hochdruckteil (26) eines Abgassystems einer Verbrennungskraftmaschine (10), wobei der Wärmetauscher (30, 32, 34) ausgebildet ist, um das aus der Verbrennungskraftmaschine aufgenommene Abgas abzukühlen, ein Kondensat daraus zu extrahieren und das aus dem Abgas abgeschiedene Kondensat zumindest teilweise über eine Entsorgungsleitung (36) in den Niederdruckteil (28) des Abgassystems einzuleiten und wobei der Wärmetauscher (30, 32, 34, 36) eine Dosiereinheit (38, 44, 46) umfasst, die ausgebildet ist, um eine definierbare oder vordefinierte Menge des Kondensats oder zumindest der Komponente des Kondensats in zumindest einen Zufuhrluft-Einlasskanal (50) eines Verbrennungszylinder (22) einzubringen, wobei das Zufuhrluftsystem einen Niedrigdruck- (13) und einem Hochdruckteil (15) aufweist, wobei die Abscheideeinheit (34) mit einer Mischeinheit (20) verbunden ist, die ausgebildet ist, um ein durch die Abscheideeinheit (34) gereinigtes Abgas und/oder zumindest einen Teil des Kondensats der Zufuhrluft im Hochdruckteil (15) des Zufuhrluftsystems zuzuführen.

14. Verfahren (80) zur Rückführung von Abgas einer Verbrennungskraftmaschine (10), wobei die Verbrennungskraftmaschine (10) ein Abgassystem mit einem Hochdruck- (26) und einem Niederdruckteil (28) aufweist, wobei das Verfahren (80) die folgenden Schritte umfasst:
- Entnehmen (82) von Abgas aus dem Hochdruckteil (26) des Abgassystems oder einer Zufuhrluft für die Verbrennungskraftmaschine (10);
- Abscheiden (84) eines Kondensats aus dem entnommenen Abgas oder der Zufuhrluft; und
- Einleiten (86) zumindest eines Teils oder einer Komponente des Kondensats in den Niederdruckteil des Abgassystems und
- Einbringen einer definierbaren oder vordefinierten Menge des Kondensats oder zumindest der Komponente des Kondensats in zumindest einen Zufuhrluft-Einlasskanal (50) eines Verbrennungszylinders (22) der Verbrennungskraftmaschine (10),
wobei das Zufuhrluftsystem einen Niedrigdruck- (13) und einem Hochdruckteil (15) aufweist, wobei die Abscheideeinheit (34) mit einer Mischeinheit (20) verbunden ist, die ausgebildet ist, um ein durch die Abscheideeinheit (34) gereinigtes Abgas und/oder zumindest einen Teil des Kondensats der Zufuhrluft im Hochdruckteil (15) des Zufuhrluft-systems zuzuführen.

## Claims

1. A system (34, 36, 38, 40, 42, 44) for recirculating exhaust gas of an internal combustion engine (10), wherein the internal combustion engine (10) has an exhaust gas system with a high-pressure part (26) and a low-pressure part (28), wherein the system (34, 36, 38, 40, 42, 44) has a separating unit (34), which is configured to separate a condensate from an exhaust gas of the high-pressure part (26) of the exhaust gas system or from an exhaust gas in a high-pressure part (15, 20) of a supply air system of the internal combustion engine (10), wherein the separating unit (34) is configured to at least partially introduce the condensate separated from the exhaust gas into the low-pressure part (28) of the exhaust gas system via waste disposal line (36), **characterised in that** a metering unit (38, 44, 46) is provided, which is configured to introduce a definable or predefined quantity of the condensate or at least of the components of the condensate into at least one supply air inlet channel (50) of a combustion cylinder (22), wherein the supply air system has a low-pressure part (13) and a high-pressure part (15), wherein the separating unit (34) is connected to a mixing unit (20), which is configured to supply an exhaust gas purified by the separating unit (34) and/or at least some of the condensate to the supply air in the high-pressure part (15) of the supply air system.

2. The system (34, 36, 38, 40, 42, 44) according to claim 1, wherein the exhaust gas system has an exhaust gas treatment unit (24) in the low-pressure part (28) of the exhaust gas system, **characterised in that** the waste disposal line (36) is configured to introduce at least some of the condensate at a point into the low-pressure part (28) of the exhaust gas system, said point being located after the exhaust gas treatment unit (24) in the exhaust, gas flow.

3. The system (34, 36, 33, 40, 42, 44) according to claim 1 or 2, **characterised in that** the system (34, 36, 38, 40, 42, 44) comprises a purifying unit (34, 38, 40, 42, 44) as an anti-corrosion unit protecting against corrosion of the internal combustion engine (10) by components of the exhaust gas, wherein the purifying unit (34, 38, 40, 42, 44) comprises the separating unit (34), and wherein the purifying unit (34, 38, 40, 42, 44) is configured to bind at least one acid, which originates from at least part of the exhaust gas of the high-pressure part (26) of the exhaust gas system, to a sacrificial material by means of a reaction in order to obtain a purified exhaust gas and in order to supply the purified exhaust gas at least partially to a supply air in the high-pressure part (15) of the supply air system.

4. The system (34, 36, 38, 40, 42, 44) according to claim 3, **characterised in that** the purifying unit (32, 38, 40, 42, 44) comprises a sacrificial material, which is consumed during operation of the system of the anti-corrosion apparatus (34, 36, 38, 40, 42, 44).

5. The system acrording to claim 3 or 4, **characterised in that** the purifying unit (34, 38, 40, 42, 44) is configured to form a corrosion product that is insoluble in water or that is only soluble in water with difficulty, as a result of the reaction of acid with the sacrificial material.

6. The system according to one of claims 3 to 5, **characterised in that** the purifying unit (34, 38, 40, 42, 44) has a Venturi nozzle (42) in order to supply the purified condensate to the exhaust gas of the high-pressure part (26) of the exhaust gas system or to the supply air system in the high-pressure part (15).

7. The system (34, 36, 38, 40, 42, 44) according to one of claims 1 to 6, wherein at least one cooling unit (30, 32) is contained in the high-pressure part (26) of the exhaust gas system, **characterised in that** the separating unit (34) or the purifying unit (34, 38, 40, 42, 44) is arranged downstream of the cooling unit (30, 32) in the exhaust gas flow or is arranged at least partially in the cooling unit (32).

8. The system (34, 36, 38, 40, 42, 44) according to one of claims 1 to 7, **characterised in that** the separating unit (34) is configured to separate the condensate or a component of the condensate from a mixture of supply air and exhaust gas in the high-pressure part (15) of the supply air system.

9. The system (34, 36, 38, 40, 42, 44) according to one of claims 1 to 8, **characterised in that** the metering unit (38, 44, 46) is configured to introduce an identical, definable or predefined quantity of the condensate or of the components of the condensate in a number of supply air inlet channels (48) of different combustion cylinders (22).

10. The system (34, 36, 38, 4C, 42, 44) according to one of claims 8 or 9, **characterised in that** the metering unit (38, 44, 46) has a neutraliser unit and/or filter unit (38, 44), which is configured to neutralise at least one acid from the condensate or the components of the condensate and/or to filter the condensate or the components of the condensate.

11. The system (34, 36, 38, 40, 42, 44) according to one of claims 8 to 10, **characterised in that** the metering unit (38, 44, 46) comprises a pump (46), which is configured to introduce the definable or predefined quantity of the condensate or at least the components of the condensate into the supply air inlet channel (48) of at least one combustion cylinder (22).

12. The system (34, 36, 38, 40, 42, 44) according to one of claims 8 to 10, **characterised in that** a metering unit (38, 44, 46) is configured to introduce, into the supply air for the combustion cylinder (22), the definable or predefined quantity of the condensate or of the components of the condensate via a bore (56) in the cylinder head (51) of the at least one combustion cylinder (22), a condensate rail (54) at an inlet channel (50) between an intake pipe (48) and the cylinder head (51) of at least one combustion cylinder (22), a condensate rail (54) integrated in the intake pipe (48) or a condensate rail (54) integrated in a cylinder head (51) of the combustion cylinder (22).

13. An exhaust gas heat exchanger (30, 32, 34, 36) for receiving an exhaust gas from a high-pressure part (26) of an exhaust gas system of an internal combustion engine (10), wherein the heat exchanger (30, 32, 34) is configured to cool the exhaust gas received from the internal combustion engine, to extract a condensate therefrom, and to at least partially introduce the condensate separated from the exhaust gas into the low-pressure part (28) of the exhaust gas system via a waste disposal line (36), and wherein the heat exchanger (30, 32, 34, 36) comprises a metering unit (38, 44, 46), which is configured to introduce a definable or predefined quantity of the condensate or at least of the components of the condensate into at least one supply air inlet channel (50) of a combustion cylinder (22), wherein the supply air system has a low-pressure part (13) and a high-pressure part (15), wherein tne separating unit (34) is connected to a mixing unit (20), which is configured to supply an exhaust gas purified by the separating unit (34) and/or at least some of the condensate to the supply air in the high-pressure part (15) of the supply air system.

14. A method for recirculating exhaust gas of an internal combustion engine (10), wherein the internal combustion engine (10) comprises an exhaust gas system with a high-pressure part (26) and a low-pressure part (28), wherein the method (80) comprises the following steps:
- removing (82) exhaust gas from the high-pressure part (26) of the exhaust gas system or a supply air for the internal combustion engine (10);
- separating (84) a condensate from the removed exhaust gas or the supply air; and
- introducing (86) at least some of the condensate or a component of the condensate into the low-pressure part of the exhaust gas system, and
- introducing a definable or predefined quantity of the condensate or at least components of the condensate into at least one supply air inlet channel (50) of a combustion cylinder (22) of the internal combustion engine (10),
wherein the supply air system has a low-pressure part (13) and a high-pressure part (15), wherein the separating unit (34) is connected to a mixing unit (20), which is configured to return an exhaust purified by the separating unit (34) and/or at least some of the condensate to the supply air in the high-pressure part (15) of the supply air system.

## Revendications

1. Système (34, 36, 38, 40, 42, 44) pour le recyclage de gaz d'échappement d'un moteur à combustion interne (10), où le moteur à combustion interne (10) présente un système de gaz d'échappement comprenant une partie haute pression (26) et une partie basse pression (28), où le système (34, 36, 38, 40, 42, 44) présente un ensemble séparateur (34) qui est conçu pour séparer un condensat à partir de gaz d'échappement de la partie haute pression (26) du système de gaz d'échappement ou bien à partir de gaz d'échappement dans une partie haute pression (15, 20) d'un système d'air d'alimentation du moteur à combustion interne (10), où l'ensemble séparateur (34) est conçu pour introduire, dans la partie basse pression (28) du système de gaz d'échappement, au moins partiellement par une conduite d'évacuation (36), le condensat séparé des gaz d'échappement,
**caractérisé en ce qu'**il est prévu un ensemble de dosage (38, 44, 46) qui est conçu pour introduire, dans au moins un conduit d'admission d'air d'alimentation (50) d'un cylindre de combustion (22), une quantité définissable ou prédéfinie du condensat, ou bien au moins du composant du condensat, où le système d'air d'alimentation présente une partie basse pression (13) et une partie haute pression (15), où l'ensemble séparateur (34) est combiné avec un ensemble mélangeur (20) qui est conçu pour fournir à l'air d'alimentation dans la partie haute pression (15) du système d'air d'alimentation, des qaz d'échappement purifiés par l'ensemble séparateur (34) et / ou au moins une partie du condensat.

2. Système (34, 36, 38, 40, 42, 44) selon la revendication 1, où le système de gaz d'échappement présente, dans la partie basse pression (28) du système de gaz d'échappement, une unité de traitement de gaz d'échappement (24), **caractérisé en ce que** la conduite d'évacuation (36) est conçue pour introduire au moins une partie du condensat, au niveau d'un emplacement situé dans la partie basse pression (28) du système de gaz d'échappement, emplacement qui se trouve, dans le flux de gaz d'échappement, en aval de l'unité de traitement de gaz d'échappement (24).

3. Système (34, 36, 38, 40, 42, 44) selon la revendication 1 ou 2, **caractérisé en ce que** le système (34, 36, 38, 40, 42, 44) présente une unité de purification (34, 38, 40, 42, 44) servant d'unité de protection contre la corrosion et agissant contre une corrosion du moteur à combustion interne (10) due à des composants des gaz d'échappement, où l'unité de purification (34, 38, 40, 42, 44) comprend l'ensemble séparateur (34) et où l'unité de purification (34, 38, 40, 42, 44) est conçue pour combiner, par une réaction, au moins un acide avec un matériau sacrificiel, ledit acide provenant d'au moins une partie des gaz d'échappement de la partie haute pression (26) du système de gaz d'échappement, pour obtenir des gaz d'échappement purifiés et fournir les gaz d'échappement purifiés, au moins partiellement à un air d'alimentation dans la partie haute pression (15) du système d'air d'alimentation.

4. Système (34, 36, 38, 40, 42, 44) selon la revendication 3, **caractérisé en ce que** l'unité de purification (34, 38, 40, 42, 44) comprend un matériau sacrificiel qui est consommé au cours du fonctionnement du système du dispositif de protection contre la corrosion (34, 36, 38, 40, 42, 44).

5. Système selon la revendication 3 ou 4, **caractérisé en ce que** l'unité de purification (34, 38, 40, 42, 44) est conçue pour former, par la réaction de l'acide avec le matériau sacrificiel, un produit corrosif insoluble dans l'eau ou difficilement soluble dans l'eau.

6. Système selon l'une quelconque des revendications 3 à 5, **caractérisé en ce que** l'unité de purification (34, 38, 40, 42, 44) présente un tube de Venturi (42) pour fournir la condensat purifié, aux gaz d'échappement de la partie haute pression (26) du système de gaz d'échappement, ou bien à l'unité de purification dans la partie haute pression (15) du système d'air d'alimentation.

7. Système (34, 36, 38, 40, 42, 44) selon l'une quelconque des revendication 1 à 6, où au moins une unité de refroidissement (30, 32) est contenue dans la partie haute pression (26) du système de gaz d'échappement, **caractérisé en ce que** l'ensemble séparateur (34) ou l'unité de purification (34, 38, 40, 42, 44) est monté(e), dans le flux de gaz d'échappement, en aval de l'unité de refroidissement (30, 32), ou bien est disposé(e) au moins partiellement dans l'unité de refroidissement (32).

8. Système (34, 36, 38, 40, 42, 44) selon l'une quelconque des revendications 1 à 7, **caractérisé en ce que** l'ensemble séparateur (34) est conçu pour séparer le condensat ou un composant du condensat résultant d'un mélange d'air d'alimentation et de gaz d'échappemcnt dans la partie haute pression (15) du système d'air d'alimentation.

9. Système (34, 36, 38, 40, 42, 44) selon l'une quelconque des revendications 1 à 8, **caractérisé en ce que** l'ensemble de dosage (38, 44, 46) est conçu pour introduire, dans plusieurs conduits d'admission d'air d'alimentation (48) de différents cylindre de combustion (22), une même quantité définissable ou prédéfinie du condensat ou du composant du condensat.

10. Système (34, 36, 38, 40, 42, 44) selon l'une des revendications 8 ou 9, **caractérisé en ce que** l'ensemble de dosage (38, 44, 46) présente un ensemble neutralisateur et / ou un ensemble filtrant (38, 44) qui est conçu pour neutraliser au moins un acide provenant du condensat ou bien le composant du condensat des gaz d'échappement et / ou pour filtrer le condensat ou le composant du condensat.

11. Système (34, 36, 38, 40, 42, 44) selon l'une quelconque des revendications 8 à 10, **caractérisé en ce que** l'ensemble de dosage (38, 44, 46) comprend une pompe (46) qui est conçue pour introduire, dans le conduit d'admission d'air d'alimentation (48) d'au moins un cylindre de combustion (22), la quantité définissable ou prédéfinie du condensat ou au moins du composant du condensat.

12. Système (34, 36, 38, 40, 42, 44) selon l'une quelconque des revendications 8 à 10, **caractérisé en ce que** l'ensemble de dosage (38, 44, 46) est conçu pour introduire, dans l'air d'alimentation pour le cylindre de combustion (22), la quantité définissable ou prédéfinie du condensat ou du composant du condensat, passant par un perçage (56) dans la culasse (51) du cylindre de combustion (22) au moins au nombre de un, par un rail de condensat (54) monté sur un conduit d'admission (50) placé entre un collecteur d'admission (48) et la culasse (51) d'au moins un cylindre de combustion (22), par un rail de condensat (54) intégré dans le collecteur d'admission (48), ou bien par un rail de condensat (54) intégré dans une culasse (51) du cylindre de combustion (22).

13. Echangeur de chaleur de gaz d'échappement (30, 32, 34, 36) servant à l'absorption de gaz d'échappement provenant d'une partie haute pression (26) d'un système de gaz d'échappement d'un moteur à combustion interne (10), où l'échangeur de chaleur (30, 32, 34) est conçu pour refroidir les gaz d'échappement absorbés et provenant du moteur à combustion interne, pour en extraire un condensat et pour introduire, dans la partie basse pression (28) du système de gaz d'échappement, au moins partiellement par une conduite d'évacuation (36), le condensat séparé des gaz d'échappement, et où l'échangeur de chaleur (30, 32, 34, 36) comprend un ensemble de dosage (38, 44, 46) qui est conçu pour introduire, dans au moins un conduit d'admission d'air d'alimentation (50) d'un cylindre de combustion (22), une quantité définissable ou prédéfinie du condensat ou au moins du composant du condensat, où le système d'air d'alimentation présente une partie basse pression (13) et une partie haute pression (15), où l'ensemble séparateur (34) est combiné avec un ensemble mélangeur (20) qui est conçu pour fournir à l'air d'alimentation dans la partie haute pression (15) du système d'air d'alimentation, des gaz d'échappement purifiés par un ensemble séparateur (34) et / ou au moins une partie du condensat.

14. Procédé (80) pour le recyclage de gaz d'échappement d'un moteur à combustion interne (10), où le moteur à combustion interne (10) présente un système de gaz d'échappement ayant une partie haute pression (26) et une partie basse pression (28), où le procédé (80) comprend les étapes suivantes consistant :
- à prélever (82) des gaz d'échappement provenant de la partie haute pression (26) du système de gaz d'échappement, ou bien à prélever un air d'alimentation pour le moteur à combustion interne (10) ;
- à séparer (84) un condensat résultant des gaz d'échappement prélevés ou de l'air d'alimentation ; et
- à introduire (86), dans la partie basse pression du système de gaz d'échappement, au moins une partie ou un composant du condensat, eL
- à introduire une quantité définissable ou prédéfinie du condensat ou au moins du composant du condensat, dans au moins un conduit d'admission d'air d'alimentation (50) d'un cylindre de combustion (22) du moteur à combustion interne (10),
où le système d'air d'alimentation présente une partie basse pression (13) et une partie haute pression (15), ou l'ensemble séparateur (34) est combiné avec un ensemble mélangeur (20) qui est conçu pour fournir des gaz d'échappement purifiés par l'ensemble séparateur (34) et / ou au moins une partie du condensat, à l'air d'alimentation dans la partie haute pression (15) du système d'air d'alimentation.
